# EUROPEAN PATENT APPLICATION

(11) **EP 2 587 889 A2**
(43) Date of publication of application: **01.05.2013**
(21) Application number: 12181898.3
(22) Date of filing: 27.08.2012
(51) Int. Cl.: H05B 33/08, H02M 1/36

(54) **Power supply device and lighting device**

(30) Priority: 31.10.2011 JP 2011239810
(71) Applicant: Toshiba Lighting & Technology Corporation, Yokosuka-shi Kanagawa 237-8510 (JP)
(72) Inventor: Kato, Go, Yokosuka-shi Kanagawa, 237-8510 (JP); Matsumoto, Shinichiro, Yokosuka-shi Kanagawa, 237-8510 (JP); Nakajima, Hiromichi, Yokosuka-shi Kanagawa, 237-8510 (JP); Kamata, Masahiko, Yokosuka-shi Kanagawa, 237-8510 (JP); Kumashiro, Shinichi, Yokosuka-shi Kanagawa, 237-8510 (JP); Kawano, Hitoshi, Yokosuka-shi Kanagawa, 237-8510 (JP); Takahashi, Koji, Yokosuka-shi Kanagawa, 237-8510 (JP)
(74) Representative: Willquist, Sofia Ellinor

(57) **Abstract**

According to one embodiment, in a power supply device, a power conversion circuit which outputs a power supply voltage to a load by converting the power supply voltage into a predetermined output voltage, and control circuit which has a ground potential which is different from that of the power conversion circuit, and controls the power conversion circuit are provided. In addition, a power supply circuit which supplies the power supply voltage to the control circuit by converting the power supply voltage into a control power supply which is insulated with respect to the ground voltage of the power conversion circuit.

## Description

### FIELD

Embodiments described herein relate generally to a power supply device which supplies electric power to a load, and a lighting device using the power supply device.

### BACKGROUND

In the related art, a power supply device, for example, having an LED element as a load rectifies an AC power supply in a rectifying circuit, converts the rectified power supply voltage into a predetermined DC voltage in a power conversion circuit, and supplies the DC voltage to the LED element, thereby turning on the LED element.

In a voltage-free type power supply device which corresponds to a range of 100 V to 242 V of an input voltage of the AC power supply, it is necessary to constantly control a output current to the LED element according to the power supply voltage, and for this reason, a power conversion circuit is controlled according to the output current to the LED element.

In this case, it is configured such that a control circuit in which a middle point potential on the high potential side of the power conversion circuit is grounded is provided, and the power conversion circuit is controlled according to an output current to the LED element using the control circuit. In this case, the control circuit which controls the power conversion circuit has a ground potential which is different from a ground potential of the power conversion circuit.

When supplying a control power supply to the control circuit, there is a configuration in which the control power supply is supplied to the control circuit through a resistor from the high potential side of the power supply voltage after rectifying.

However, when the control power supply is supplied to the control circuit using the resistor, there is a problem in that it takes time until the control circuit operates when the power supply voltage is low according to the input voltage of the AC power supply, and a loss due to the resistor is increased, and efficiency is decreased when the power supply voltage is high.

In the related art, when the control circuit which controls the power conversion circuit has a ground potential which is different from a ground potential of the power conversion circuit, there is a problem in that it is difficult to supply the control power supply efficiently to the control circuit, since it takes time when operating the control circuit, the efficiency is decreased due to the loss, or the like.

An object of the embodiments is to provide a power supply device which is able to efficiently supply a control power supply to a control circuit, and a lighting device when the control circuit which controls a power conversion circuit has a ground potential which is different from that of the power conversion circuit.

### DESCRIPTION OF THE DRAWINGS

Fig. 1 is a circuit diagram of a power supply device according to an embodiment.
Fig. 2 is a timing chart which shows a movement at the time of starting a circuit of the same power supply device as above.

### DETAILED DESCRIPTION

A power supply device according to embodiments is provided with a power conversion circuit in which a power supply voltage is output to a load by being converted into a predetermined output voltage, and a control circuit which has a ground potential which is different from a ground potential of the power conversion circuit and controls the power conversion circuit. In addition, a power supply circuit which converts the power supply voltage into a control power supply which is insulated with respect to the ground potential of the power conversion circuit, and supplies the control power supply to the power supply circuit is provided.

By adopting this configuration, since the power supply circuit converts the power supply voltage into the control power supply which is insulated with respect to the ground potential of the power conversion circuit, and supplies to the control circuit, it can be expected that the control power supply is efficiently supplied to the control circuit which has the ground potential which is different from the ground potential of the power conversion circuit, and controls the power conversion circuit

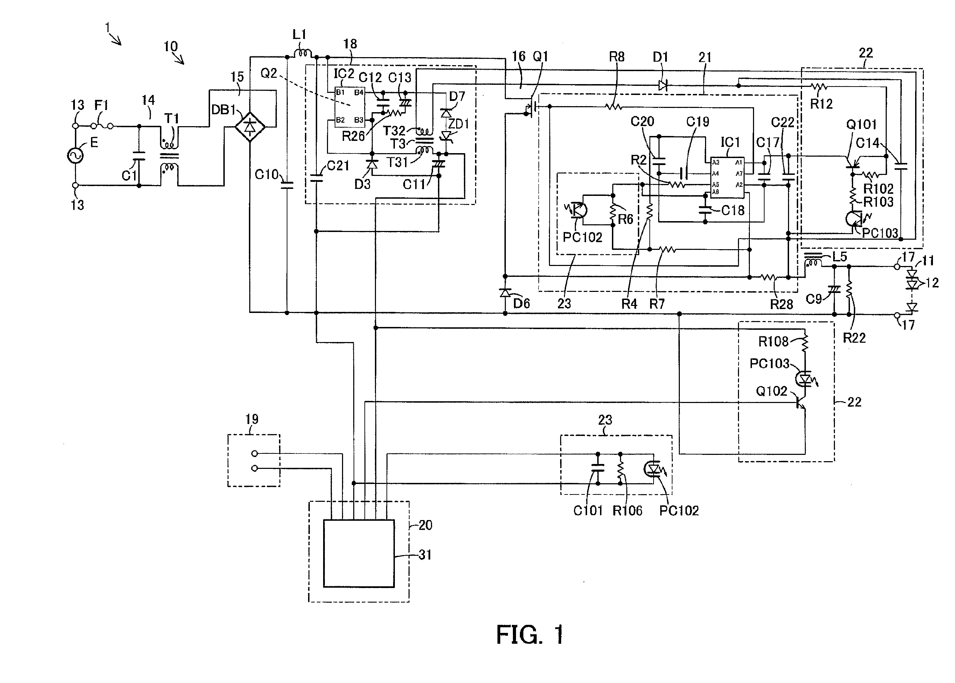

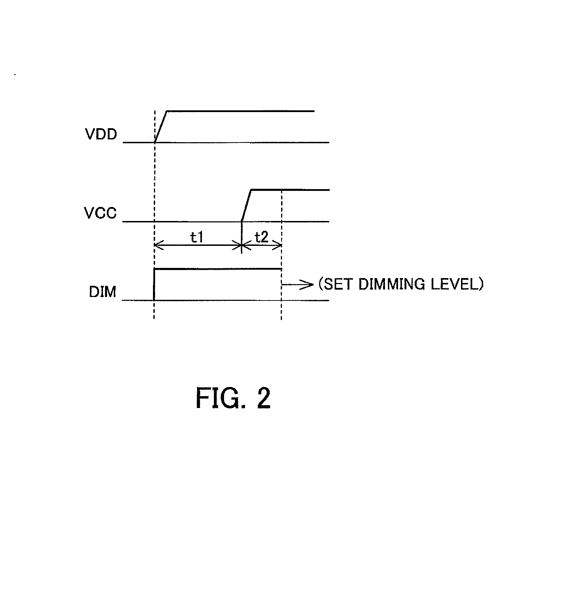

Hereinafter, an embodiment will be described with reference to Figs. 1 and 2.

In Fig. 1, a lighting device 1 includes a power supply device 10, a plurality of LED elements 12 which is connected in series as a load 11.

The power supply device 10 includes a power supply input unit 13 to which an AC power supply E is input, a filter circuit 14 which is connected to a the power supply input unit 13, a rectifying circuit 15 which is connected to the filter circuit 14, and rectifies the AC power supply E, a power conversion circuit 16 as a main circuit which converts the power supply voltage which is rectified in the rectifying circuit 15 to a predetermined output electric power which turns on the LED element 12, and an output unit 17 as an output unit of the power conversion circuit 16, and to which the LED element 12 is connected.

Further, the power supply device 10 includes a power supply circuit 18 which supplies a control power supply, a dimming signal input unit 19 which inputs a dimming signal, a first control circuit 20 which processes the dimming signal, a second control circuit 21 as a control circuit which controls the power conversion circuit 16, a movement control circuit 22 which controls a movement and stop of the second control circuit 21, and a dimming operation circuit 23 which causes the second control circuit 21 to perform a dimming operation according to a control of the first control circuit 20.

In addition, the power supply input unit 13 allows an input of the AC power supply E in a range of, for example, 100 V to 242 V.

In addition, the filter circuit 14 is connected with a capacitor C1 and a transformer T1 through a fuse F1, in the power supply input unit 13.

In addition, as the rectifying circuit 15, a full-wave rectifier DB1 is used. An output end of the full-wave rectifier DB1 is connected with a capacitor C10 in parallel.

Further, the power conversion circuit 16 is a step-down chopper circuit, and is connected with a field effect transistor Q1 which is MOSFET as a switching element, a resistor R28, an inductor L5, and an LED element 12 of an output unit 17 at an output end of the full-wave rectifier DB1 through an inductor L1. The output unit 17 is connected with a resistor R22, and an electrolytic capacitor C9 in parallel.

A cathode of a diode D6 is connected between a source of the field effect transistor Q1 and the inductor L5, and an anode of of the diode D6 is connected to the LED element 12, and a ground potential side of the electrolytic capacitor C9. The diode D6 releases energy which is accumulated in the inductor L5 when the field effect transistor Q1 is turned off through the LED element 12 and the electrolytic capacitor C9.

In addition, a capacitor C21 is connected to the power supply circuit 18 at an output end on the high potential side of the full-wave rectifier DB1 through the inductor L1, and a ground potential side of the capacitor C21 is connected to a first control circuit 20. The inductor L1 is connected with a terminal B1 of a control unit IC2, and a terminal B2 of a control unit IC2 is connected to the first control circuit 20 through a primary winding T31 of a transformer T3. A cathode of a diode D3 and one end of an electrolytic capacitor C11 are connected to both ends of the primary winding T31. An anode of the diode D3 and the other end of the electrolytic capacitor C11 are connected between the capacitor C21 and the ground potential side of the full-wave rectifier DB1.

A series circuit of a capacitor C12, a capacitor C13 and a resistor R26 is connected between terminals B4 and B3 of the control unit IC2 in parallel, a cathode of a diode D7 is connected to a electrolytic capacitor C13, an anode of a Zener diode ZD1 is connected to an anode of the diode D7, and a cathode of the Zener diode ZD1 is connected to a capacitor C11.

In addition, the control unit IC2 is, for example, an IPD (Intelligent power device), includes a switching element Q2 therein, converts a power supply voltage which is input to the control unit IC2 due to a switching operation of the switching element Q2 to a predetermined first control power supply, and a first control power supply which is common to the ground potential of the power conversion circuit 16 is supplied to the first control circuit 20 through the primary winding T31 of the transistor T3.

In a secondary wiring T32 which is insulated with respect to the primary winding T31 of the transformer T3, and is magnetically coupled thereto, a second control power supply is induced when the first control power supply flows to the primary winding T31, and the second control power supply having an arbitrary ground potential which is different from the ground potential of the power conversion circuit 16 is supplied to the second control circuit 21 through the movement control circuit 22.

In addition, a dimming signal is input to the dimming signal input unit 19 from a dimmer which is provided outside.

In addition, the first control circuit 20 includes a microcomputer 31, and is operated when the first control power supply which is common to the ground potential of the power conversion circuit 16 is supplied from the power supply circuit 18. The microcomputer 31 performs processing according to the dimming signal from the dimmer, controls the movement and stop of the second control circuit 21 by outputting a movement signal and a stop signal to the movement control circuit 22, or controls the dimming operation of the second control circuit 21 by forming a dimming control signal such as a PWM dimming control signal corresponding to the dimming signal, and outputting the dimming signal to the dimming operation circuit 23.

In addition, the second control circuit 21 includes a control circuit IC1, and the second control power supply having an arbitrary ground potential which is different from the ground potential of the power conversion circuit 16 is supplied to a VCC terminal A1 of the control unit IC1 from the power supply circuit 18 through the movement control circuit 22. A GND terminal A2 is connected to one end of the inductor L5 on the field effect transistor Q1 side, and makes a middle point potential of the power conversion circuit 16 be grounded. The capacitors C17 and C22 are connected in parallel between a VCC output terminal A1 and a GND terminal A2.

A terminal A3 of the control unit IC1 is connected between a cathode of the diode D6 and the inductor L5 through the resistors R4 and R7, and is input with a detection voltage corresponding to an output current of the power conversion circuit 16.

The terminal A4 of the control unit IC1 is connected to a gate of the field effect transistor Q1 through a capacitor C19.

A capacitor C20 is connected between the terminal A3 and the GND terminal A2 of the control unit IC1, a resistor R2 is connected between a terminal A5 and the dimming operation circuit 23, and a capacitor C18 is connected between a terminal A6 and a GND terminal A2.

A terminal A7 of the control unit IC1 is connected to the gate of the field effect transistor Q1 through a resistor R8.

In addition, the control unit IC1 includes an operational amplifier therein, and is input with a predetermined reference voltage at one input terminal of the operational amplifier, is input with a detection voltage corresponding to the output current of the power conversion circuit 16 from a terminal A3 to the other input terminal, a current corresponding to a difference between the reference voltage and the detection voltage is output from a terminal A4, and ON and OFF of the field effect transistor Q1 is controlled in a feedback manner so that the detection voltage input to the terminal A3 becomes constant. That is, the terminal A3 is an input terminal of the operational amplifier, and the terminal A4 is an output terminal of the operational amplifier.

In addition, in the movement control circuit 22, one end of a secondary winding T32 of the transistor T3 of the power supply circuit 18 is connected to the VCC terminal A1 of the control unit IC1 through the diode D1, a resistor R12, and the transistor Q101 and the other end of the secondary winding T32 is connected to the GND terminal A2 of the control unit IC1. A capacitor C14 is connected between both ends of the secondary winding T32. A resistor R102 is connected between an emitter and a base of a transistor Q101. The base of the transistor Q101 is connected with a resistor R103, and the GND terminal A2 of the control unit IC1 through a photo transistor as an insulation transmission element for movement control of a photo coupler PC103.

A resistor R108, a photodiode of the photo coupler PC103, a collector of a transistor Q102, and a series circuit of the emitter are connected between the primary winding T32 side of the transistor T3 which supplies the first control power supply of the power supply circuit 18 and the ground potential of the power conversion circuit 16. A base of the transistor Q102 is connected to a terminal which outputs the movement or stop signal from the microcomputer 31 of the first control circuit 20.

In addition, when the transistor Q102 is turned ON and OFF according to the movement and stop signals from the microcomputer 31, the photo coupler PC103 is turned ON and OFF. When the photo coupler PC103 is turned off, the transistor Q101 is turned OFF, and the second control power supply is supplied to the second control circuit 21 from the power supply circuit 18, and when the photo coupler PC103 is turned on, the transistor Q101 is turned on, and the supply of the second control power supply to the second control circuit 21 is stopped.

In addition, the dimming operation circuit 23 includes a photo coupler PC102 as an insulation transmission element for dimming, and a photodiode of the photo coupler PC102 is connected between a terminal which outputs a dimming signal from the microcomputer 31 of the first control circuit 20 and the ground potential of the power conversion circuit 16. A capacitor C101, and a resistor R106 are connected to the photodiode of the photo coupler PC102 in parallel.

A resistor R6 is connected in parallel to a collector and an emitter of a photo transistor of the photo coupler PC102, one end of the resistor R6 is connected to the terminal A5 of the control unit IC1 through the resistor R2, and the other end is connected between the resistor R4 and a resistor R7 of the second control circuit 21.

Subsequently, operations of the power supply device 10 will be described.

The input AC power supply E is rectified in the full-wave rectifier DB1, and the rectified power supply voltage is supplied to the power supply circuit 18 and the power conversion circuit 16.

When the control unit IC2 of the power supply circuit 18 to which the power supply voltage is supplied starts the operation, the switching element Q2 of the control unit IC2 performs a switching operation, the first control power supply which is common to the ground potential of the power conversion circuit 16 is generated, and the control power supply is supplied to the first control circuit 20 through the primary winding T31 of the transformer T3. In addition, when the first control power supply flows to the secondary winding T32 which is insulated with respect to the primary winding T31 of the transformer T3, and is magnetically coupled thereto, the second control power supply is induced, and the second control power supply which has an arbitrary ground potential which is different from that of the power conversion circuit 16 is supplied to the movement control circuit 22.

When the first control circuit 20 to which the first control power supply is supplied starts the operation, the photo coupler PC103 of the movement control circuit 22 is turned off by an operation signal from the microcomputer 31, the transistor Q101 of the movement control circuit 22 is turned off, and the second control power supply is supplied to the second control circuit 21 through the movement control circuit 22.

When the second control circuit 21 to which the second control power supply is supplied starts the operation, the control unit IC1 turns off the field effect transistor Q1 of the power conversion circuit 16.

When the field effect transistor Q1 is turned on, a current flows to the electrolytic capacitor C9 passing through the field effect transistor Q1, the resistor R28, and the inductor L5. When charging voltage of the electrolytic capacitor C9 becomes a forward voltage or more of the LED element 12, the current flows to the LED element 12, and the LED element 12 is turned on.

When the field effect transistor Q1 is turned off, energy which is accumulated in the inductor L5 is released in the electrolytic capacitor C9, the LED element 12, and a closed circuit of the diode D6. Due to a current which flows by the releasing of the energy, the LED element 12 is turned on.

Due to such an ON and OFF of the field effect transistor Q1, the field effect transistor Q1 performs a switching operation at a high frequency, and the LED element 12 is turned on.

The control unit IC2 controls the ON and Off of the field effect transistor Q1 in a feedback manner so that the output current of the power conversion circuit 16 becomes constant on the basis of the detection voltage corresponding to the output current of the power conversion circuit 16.

In addition, the microcomputer 31 of the first control circuit 20, to which the dimming signal from the dimmer is input, outputs a dimming control signal corresponding to the dimming signal to the dimming operation circuit 23, and the dimming control signal is delivered to the second control circuit 21 through the photo coupler PC102. The second control circuit 21 controls ON and OFF of the field effect transistor Q1 according to the delivered dimming control signal, and performs dimming of the LED element 12.

In addition, in the dimming control, when the dimming signal is in a range beyond a predetermined condition, a waiting mode is present in which the power conversion circuit 16 is stopped. In the waiting mode, when the microcomputer 31 outputs a stop signal to the movement control circuit 22, the photo coupler PC103 is turned on the transistor Q102 of the movement control circuit 22 is turned on, and a supply of the second control power supply to the second control circuit 21 is stopped. For this reason, the power conversion circuit 16 is stopped, to which the supply of the second control power supply is stopped, and the LED element 12 is turned off.

In this manner, in the power supply device 10, since the power supply circuit 18 converts the power supply voltage which is rectified in the rectifying circuit 15 into the second control power supply which is insulated with respect to the ground potential of the power conversion circuit 16, and supplies the second control power supply to the second control circuit 21, it is possible to efficiently supply the second control power supply to the second control circuit 21 which has a ground potential which is different from that of the ground potential of the power conversion circuit 16, and controls the power conversion circuit 16. For this reason, it is possible to correspond to a wide range of an input voltage of 100 V to 242 V, and to obtain high efficiency.

In addition, by adopting one power supply circuit 18, it is possible to supply the power supply voltage which is rectified in the rectifying circuit 15 to the first control circuit 20 by converting the power supply voltage into the first control power supply, and to supply the first control power supply to the second control circuit 21 by converting thereof to the second control power supply which is insulated with respect to the ground potential of the power conversion circuit 16. Accordingly, it is possible to simplify the configuration.

In addition, since the power supply circuit 18 includes the switching element Q2 which converts the power supply voltage which is rectified in the rectifying circuit 15 into the first control power supply, and the transformer T3 which converts the first control power supply into the second control power supply, it is possible to obtain high power source conversion efficiency even if the input voltage is high, and to supply the second control power supply which is insulated with respect to the ground potential of the power conversion circuit 16 to the second control circuit 21.

In addition, since the movement control circuit 22 uses the photo coupler PC103, it is possible to transmit the movement control signal from the first control circuit 20 to the movement control circuit 22 while maintaining the first control circuit 20 and the second control circuit 21 having the different potential from each other in the insulating state.

Further, since the photo coupler PC103 is a switching element having temperature dependency in which the higher the temperature, the lower the current conversion rate, it is possible to stop the second control circuit by performing de-energization of the second control circuit 21 when the power supply device 10 becomes an abnormally high temperature. Accordingly, it is also possible to have a so-called thermal shut down function.

In addition, since the dimming operation circuit 23 uses the photo coupler PC102, it is possible to transmit the dimming control signal to the second control circuit 21 from the first control circuit 20 while maintaining the first control circuit 20 and the second control circuit 21 having the different potential from each other in the insulating state.

In addition, as the insulation transmission element for dimming, for example, an element which magnetically transmits a signal, or the like, may be used without limiting to the photo coupler.

In addition, the control unit IC1 of the second control circuit 21 is input with a predetermined reference voltage at one input terminal of the operational amplifier, input with a detection voltage corresponding to the output current of the power conversion circuit 16 from an FB terminal at the other input terminal, and a current corresponding to a difference between the reference voltage and the detection voltage is output from the terminal A4. However, when a dimming level deepened so that it becomes dark from an all lit state, the detection voltage which is input to the terminal A3 becomes closer to the reference voltage, and a current that flows from the terminal A4 becomes small. In addition, the control unit IC1 has a property of not operating when the current becomes a predetermined current value or less.

Due to such a property of the control unit IC1, at the time of inputting a power supply of the power supply device 10, when a dimming control signal of a dimming level which is set by the first control circuit 20 is output to the second control circuit 21, and the second control circuit 21 is to be started in the set dimming level, it takes time to start the second control circuit 21, and as a result, it takes time to turn on the LED element 12.

Therefore, the first control circuit 20 outputs a dimming control signal of all lighting to the second control circuit 21 when starting, and outputs a dimming control signal of a dimming level which is set after a predetermined start time from the starting to the second control circuit 21.

That is, as shown in Fig. 2, when the power supply VDD is input, the first control circuit 20 outputs a dimming control signal DIM of all lighting to the second control circuit 21. Due to the property of dimming control of the first control circuit 20, a power supply VCC of the control unit IC1 of the second control circuit 21 starts up after a predetermined time t1 after inputting the power supply VDD, and operations thereof are started in the all lighting state. After a predetermined start time t2 from inputting of the power supply VDD (after a predetermined time t3 from starting up of the power supply VCC of the control unit IC1), the first control circuit 20 outputs the dimming control signal DIM of the dimming level which is set to the second control circuit 21. Since the output current from the terminal A4 of the control unit IC1 is sufficiently increased until this time, it is possible to start the second control circuit 21 earlier, and as a result, it is possible to shorten a turning-on time of the LED element 12.

In addition, the first control circuit 20 is able to shorten the start time of the second control circuit 21 by adjusting the start time t2 from inputting the power supply VDD according to the set dimming level, and to prevent an outbreak of a flash of light due to turning-on of the all lighting at the time of starting. In this case, it is preferable to set the start time to be longer, as the dimming level is deeper. The start time is less than two seconds at the most.

In addition, when the power supply device 10 is not provided with the dimming function, the power supply device may not be provided with the microcomputer 31, the movement control circuit 22, and the dimming operation circuit 23. Even in this case, the power supply voltage which is rectified in the rectifying circuit 15 can be supplied to the second control circuit 21 by converting the power supply voltage into the second control power supply which is insulated with respect to the ground potential of the power conversion circuit 16 by the power supply circuit 18.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (10) comprising:
a power conversion circuit (16) which converts a power supply voltage into a predetermined output electric power, and outputs the predetermined output electric power to a load (11) ;
a control circuit (21) which has a ground potential different from a ground potential of the power conversion circuit (16), and controls the power conversion circuit (16); and
a power supply circuit (18) which converts the power supply voltage into a control power supply which is insulated with respect to the ground potential of the power conversion circuit (16), and supplies the control power supply to the control circuit (21).

2. A power supply device (10) comprising:
a power conversion circuit (16) which converts a power supply voltage into a predetermined output electric power, and outputs the predetermined output electric power to a load (11);
a first control circuit (20) which has a ground potential common to a ground potential of the power conversion circuit (16) ;
a second control circuit (21) which has a ground potential different from the ground potential of the power conversion circuit (16), and controls the power conversion circuit (16); and
a power supply circuit (18) which supplies the power supply voltage to the first control circuit (20) by converting the power supply voltage into a first control power supply, and supplies the first control power supply to the second control circuit (21) by converting the first control power supply into a second control power supply which is insulated with respect to the ground potential of the power conversion circuit (16).

3. The device (10) according to claim 2,
wherein the power supply circuit (18) includes a switching element (Q2) which converts the power supply voltage into the first control power supply, and a transformer (T3) which converts the first control power supply into the second control power supply.

4. The device (10) according to claim 2 or 3, further comprising:
a movement control circuit (22) which controls a movement and a stop of the second control circuit (21) according to an input of a movement control signal; and
an insulation transmission element for movement control (PC103) which maintains the first control circuit (20) and the second control circuit (21) to be in an insulating state, and transmits a movement control signal from the first control circuit (20) to the movement control circuit (22).

5. The device (10) according to claim 4, further comprising:
an insulation transmission element for dimming (PC102) which maintains the first control circuit (20) and the second control circuit (21) to be in the insulating state, and transmits a dimming control signal to the second control circuit (21) from the first control circuit (20),
wherein the second control circuit (21) controls a power conversion circuit (16) so as to perform dimming of an LED element (12) as a load (11) according to an input of the dimming control signal, and
wherein the first control circuit (20) outputs a dimming control signal of all lighting at a time of starting to the second control circuit (21), and outputs a dimming control signal of a dimming level which is set after a predetermined start time from starting, to the second control circuit (21).

6. The device (10) according to claim 5,
wherein the first control circuit (20) changes a start time according to the set dimming level.

7. A lighting device (1) comprising:
an LED element (12); and
a power supply device (10) according to any one of claims 1 to 6 which supplies electric power to the LED element (12).
